# EUROPEAN PATENT APPLICATION

(11) **EP 1 385 112 A1**
(43) Date of publication of application: **28.01.2004**
(21) Application number: 03076998.8
(22) Date of filing: 27.06.2003
(51) Int. Cl.: G06F 17/60, G09B 7/00

(54) **Decision support and work management for synchronizing learning services**

(30) Priority: 28.06.2002 US 391929 P; 28.06.2002 US 391932 P; 29.07.2002 US 398715 P; 29.07.2002 US 398926 P
(71) Applicant: Accenture Global Services GmbH, 8200 Schaffhausen (CH)
(72) Inventor: Foley, Christopher P., Kenilworth, IL 60043 (US); Chuang, Kai, Highlands Ranch, CO 80129 (US); Draper, William Christopher, Jr., New York, NY 10021 (US); Stovall, Thomas Kenneth, Marietta, GA 30067 (US); Hubbell, John R., Evanston, IL 60201 (US)
(74) Representative: Siniscalco, Fabio

(57) **Abstract**

Disclosed are decision support and resource synchronization tools and platforms and related methods for synchronizing learning services in a manner that is responsive to dynamic business needs. In particular, disclosed is a decision support tool that enables learning solutions to be responsive to an organization's business timelines, goals and strategic objectives so as to enable an organization to have its learning needs managed effectively in a manner similar to the management of a traditional business. Also disclosed is a synchronization platform for a learning solution network that uses electronic tools and information sharing capabilities to efficiently track and report various performance metrics to ensure that ongoing learning efforts are aligned with the business strategies and learning objectives as measured by quantifiable performance metrics.

## Description

### Cross Reference To Related Applications

The present application claims priority from U.S. Provisional Patent Application Serial No. 60/391,932, filed June 28, 2002, from U.S. Provisional Patent Application Serial No. 60/391,929, also filed June 28, 2002, from U.S. Provisional Patent Application Serial No. 60/398,715, filed July 29, 2002, and from U.S. Provisional Patent Application Serial No. 60/398,926, also filed July 29, 2002. Furthermore, the present application is related in subject matter to U.S. Non-provisional Patent Application Serial No. 10/265,156, filed October 7, 2002, and to U.S. Non-provisional Patent Application Serial No. 10/401,045, filed March 28, 2003, the specifications of both of which are hereby incorporated by reference in their entirety.

### Field of the Invention

The present invention relates to decision support, work management and resource synchronization tools and platforms and related methods for synchronizing resource usage by learning services in a manner that is responsive to dynamic business needs. In particular, the present invention relates to tools, platforms and process that enable learning solutions to be responsive to an organization's business timelines, goals, strategic objectives, and resource constraints so as to enable an organization to have its learning needs managed effectively in a manner similar to the management of a traditional business.

### Background of the Invention

Employee training and education are becoming increasingly more critical to the success of organizations within today's modern global economy. As a minimum requirement to remaining competitive, companies that operate in today's complex industries need employees who remain knowledgeable and current in areas of expertise that serve the companies' ever-evolving strategic objectives. Executives of such companies feel this need for improved learning solutions as it is brought to the forefront of their strategic objectives by various business imperatives of the competitive market. Improved learning solutions require decision support capabilities that enable executives to identify learning needs, introduce learning efforts to serve those needs, and monitor the effectiveness of implemented learning efforts all while synchronizing associated resource usage and work expenditures.

For example, one such business imperative felt by the executives of many companies is need to accelerate their "clock speed" when introducing new or repositioning existing product offerings. A difficulty faced by learning systems in supporting this rapid change in business positioning is that many different individuals in a given company perform many different functions and therefore require different types of training to implement a single change in business position. The longer training takes, the more the implementation of strategic business objectives is delayed. Information about resource availability, changes, and implementation progress are needed on a real-time basis.

Likewise, learning capabilities of a company must be able to support organization growth and expansion that requires the company to rapidly attract, train, and/or deploy a skilled workforce. Thus, improved learning capabilities are needed that accelerate the training speed and speed to competency of an entire workforce. These improved learning capabilities can best be implemented with tools that help identify optimal delivery mechanisms and measure the effectiveness of the various aspects of an organization-wide learning solution.

Furthermore, corporate mergers and reorganizations often necessitate massive post-merger/reorganization integration efforts by the surviving companies. This not only requires reconciling pre-existing business goals and strategies, but also integrating and upgrading educational and training efforts within the surviving corporate entities. Improved learning solutions that include adequate decision support capabilities help to deal with such occurrences by being able to easily modify existing training efforts to match the changing business environment.

Finally, as companies are always looking across their organization to identify ways to manage costs, it is beneficial to have learning solutions that can allocate learning and training costs accurately across different business units and ventures so as to facilitate cost management. Even more beneficial are learning solutions that can be used to generate strategic cost reductions or even spur or generate profits. Such cost tracking and allocation capabilities are particularly necessary as organizations become larger in scale and more diverse in scope. With adequate decision support capabilities, it is possible that a learning solution can be leveraged outside the organization for revenue growth and cost savings opportunities. Some examples of this include leveraging corporate knowledge in a new way to create a new source of revenue, using training to align value chain partners, or reducing support costs by placing information with the customer.

Improved learning solutions that overcome the above-described and other problems associated with current learning solutions require effective decision support capabilities for synchronizing available learning services components across a series of multi-disciplinary functions. Improved learning solutions preferably utilize a customizable blend of computerized on-line instructional systems and instructor based services. To be effective, the aforementioned learning solutions require the ability to respond quickly and efficiently to logistical and resource concerns. Optimization of limited resources is required for peak efficiency of improved learning solutions. Decision support tools are needed to make optimization possible by synchronizing the demand and allocation of limited resources.

The ability to provide current training across a variety of topics and over a variety of platforms can only be effective if near real-time logistical information is available to decision makers. Improved learning solutions must include tools to enhance the system response time over previous learning solutions in responding to instructor, student, and/or resource constraint issues.

Furthermore, decision support capabilities are needed that ensure that ongoing learning efforts are aligned with the business strategies and budget priorities as measured by quantifiable performance metrics. Decision support capabilities to enable improved learning solutions must effectively collect and present to decision makers key indicators upon which to base their decisions. To enable decision makers to make the most effective decisions, this information must be available in real-time and uniformly accessible to separate business units.

Thus, business organizations are increasingly beginning to recognize the need for improved training organizations that are responsive to the foregoing business imperatives but which still deliver results that stay aligned with evolving business strategies. Education within modern companies, however, remains problematic for various reasons. One major complicating factor is the nature of many modern corporations. Often, they are diverse entities that operate globally across international boundaries and in different competitive markets and business areas. Organizations or groups within such modern companies that are charged with learning course or content development and management of learning services are often poorly equipped (either in terms of personnel allocation, organization of the learning assets, infrastructure, or otherwise) to serve all the learning needs of those companies. As such, learning service organizations or groups are often plagued with outdated course content and/or inefficient management services that fail to utilize current technologies to dynamically develop and deliver meaningful courses and related necessary course materials.

Another disadvantage of contemporary learning solutions is that they fail to provide the ability for executives to monitor performance of learning solution efforts in achieving their underlying purpose of furthering business strategies. It would be helpful if executives had access to various performance or success metrics that measure the performance of a given learning solution similar in manner to how performance is measured in traditional performance driven areas of their core business. Useful metrics relating to a learning solution could include, for example, learning-output metrics such as ratios and tallies relating to course hours produced or student days delivered, and strategic-output metrics which attempt to quantify impacts of training upon functional productivity (e.g., product units sold following the implementation of a specific sales force training effort). The inability to accurately monitor performance metrics leaves organizations and their learning services with an inability to ensure service quality, allow for accurate resource forecasts, allocate costs and provide a means to measure the learning solution's success helping the organizations meet goals and commitments. This aspect makes it difficult for executives and learning administrators to make certain that ongoing and future learning efforts are continuously aligned with business strategies, priorities and goals.

The identification and prioritization of learning needs, the selection of learning approaches, the development of learning content, the delivery of learning instruction, and the overall management and administration learning efforts and content require learning solutions that are responsive to business strategies and imperatives, and scalable to manage numerous logistical factors that inherently accompany the outsourcing of learning services for a large enterprise. Contemporary learning solutions employed in the business world are not equipped with decision support capabilities to integrate the many complicated processes and systems that must be implemented to ensure that a given company's learning efforts meet their learning needs as dictated by prioritized business strategies.

A significant challenge for such a global organization is to align business and learning objectives and then execute timely development and delivery of course material. Effective execution of an organization's overall learning effort requires synchronization of information and corporate strategy across a series of multi-disciplinary functions. Thus, there remains a need in the art for an improved decision support tool and related methods that enables effective implementation of a complex learning solution and overcomes the above-described and other problems associated with current implementations of learning solutions.

### Summary of the Invention

In light of the above-described and other deficiencies inherent in contemporary learning solutions, it is an object of the present invention to provide decision support, work management and resource synchronization tools and platforms and related methods that enable an organization's leaning development and delivery processes to be executed in a manner consistent with the organization's business and learning objectives. Such tools, platforms and related methods are capable of dramatically improving an organization's efficiency by capturing, integrating and reporting essential performance indicators across the functional modules of the learning solution.

Concurrently, it is an object of the present invention to provide a decision support, work management and resource synchronization tools and platforms and related methods that enable a learning solution to be driven by business strategies and priorities in all aspects of any given learning effort implemented by the learning solution. Such aspects of a learning effort include the design, development and management of learning content, the coordination and delivery of learning content and instruction, and the administration of learning solution performance.

Additionally, it is an object of the present invention to provide tools, platforms and related methods that enable a learning solution to efficiently manage ongoing and in-development learning efforts by providing access to up-to-date and accurate information relevant to content design, development, management, delivery, and administration. Such tools, platforms and methods enable learning resource allocations to be reviewed and modified easily by learning solution administrators, learning effort and/or course administrators, or instructors in response to changing business strategies and priorities.

Further, it is also an object of the present invention to provide tools, platforms, and related methods that enable a learning solution to allocate learning costs and bill appropriate business units or projects for learning effort expenditures such that the solution can be implemented by a business partner or sub-unit organization operating independently like a separate business entity from the organization requesting/needing the learning services. Thus, learning services needs of an organization can either be outsourced to a separate business entity or still managed internally by the learner organization, but independently as a separate business unit with the same built-in imperatives to reduce costs and drive profit centers as those business units and/or external organizations that will ultimately pay for the learning services.

Also, it is an object of the present invention to provide decision support and resource synchronization tools, platforms and related methods that enable a learning solution to be embodied in a network of learning systems in compliance with relevant e-learning standards. Such tools, platforms and methods will keep information of applicable media formats (e.g., Web-based, instructor-led, or virtual instructor-led) for learning courses and identify available system resources to support delivery. In this manner, the learning systems may be made accessible over any computer network, including the Internet, through an open architecture that enables a business to integrate such learning solution systems with its existing network's applications and infrastructure.

Furthermore, it is an object of the present invention to provide tools, platforms and related methods that facilitate the monitoring, organization, and reporting of learning solution performance metrics, thus enabling efficient coordination of learning efforts with business strategies and priorities.

To achieve these and other objects, the present invention comprises in one embodiment a decision support tool and related methods that enable the assembly, storage, review and usage of essential performance indicator data and provide real-time updates to allow learning administrators to effectively manage resource allocation and work flow within a learning solution in a manner that is highly responsive to dynamic business needs of an associated learner organization. Among other things, the decision support tool captures, integrates and reports performance indicators across a learning organization's functional units (e.g., business strategy alignment, content development, delivery of content and instruction, and learning solution administration). Performance indicators consist of accumulated data to support the following business processes: forecasting, budgeting, performance planning, performance reporting, account management, production management, media configuration, resource allocation, delivery coordination, status management and needs analysis. More specifically, performance indicators may include, for example, measurements of the output of a learning solution (e.g., instructional course-hours developed or delivered, hours or resources expended in development, and combinations thereof), measurements of performance level of learning efforts provided by the learning solution (e.g., student satisfaction, test and/or certification results), and measurements of the business impact of learning efforts (e.g., improvements in employee productivity following training). This information can then be used to ensure processes within each functional unit remain consistent with the organization's strategic goals. Also, the information can be used to report on and manage service level agreements for outsourced learning services. The decision support tool thereby allows implementation of a learning solution that is responsive to an organization's business timelines, budgets, goals and strategic objectives and thereby enables the organization to have its learning needs managed effectively in a manner similar to the management of a traditional client servicing business.

A decision support tool according to embodiments of the present invention serves as an instrument to integrate basic modules of a learning solution's interrelated and interdependent business processes. The interaction of the various modules of business processes with one another helps to define the services, performance metrics and application capabilities, among other things, required to support an optimized outsourced solution to meet a given organization's business learning objectives.

Embodiments of a decision support tool according to the present invention may be employed to support a business centric learning solution by helping to integrate various modules of such a solution, including a business strategy alignment module, content management module, and delivery module. Preferably, a learning administration module may also be included in such learning solutions and, accordingly, integrated via the decision support tool. In general, such a business strategy alignment module embodies business processes adapted to accept business strategy input from the learner organization, prioritize learning requests/needs, and assist in developing and delivering appropriate learning efforts by communicating relevant information to processes in the various other modules of the learning solution. A content management module embodies business processes adapted to develop internally, or alternatively license from external sources, the learning content and instructional materials necessary to implement the learning efforts identified by the business strategy alignment module, and also catalogue learning content appropriately such that it can be reused in future learning efforts. A delivery module typically embodies business processes adapted to implement the business processes used in the learning solutions for coordinating the delivery of high quality training across a plurality of media in a cost efficient manner, including the scheduling of training facilities and other resources. Additionally, a learning administration module embodies business processes for facilitating centralized learning management and administrative services across the entire learning solution such as curriculum management, course registration, course fulfillment support, and record keeping of training results.

For example, a decision support tool and related methods according to the present invention may be used to prioritize learning requests relating to content development, training delivery, etc., when limited resources preclude the completion of all requested training within an organization. Embodiments of the present invention can also provide performance indicator data that decision makers can use to identify learning needs, select learning approaches, develop learning content, coordinate and deliver learning instruction, and manage and administer learning efforts. Preferably, such performance indicator data is assembled and compiled automatically by the decision support tool and made available to administrators of a learning solution to create useful cost, resource usage, and learning effort success/failure reports.

According to another embodiment of the present invention, a learning resources synchronization and allocation platform is provided that may be utilized within a network of other learning function platforms that together provide the electronic tools and information sharing capabilities needed to efficiently implement and manage learning efforts according to the business desires of a complex learner organization. The other learning function platforms interface with the resource synchronization platform to allow it to obtain data from learning management systems, learning content and course developers and electronic curricula databases, and electronic delivery systems and thereby facilitate the coordination and synchronization of learning content development, delivery and management. In this manner, a learning solution employing such a synchronized learning network may enjoy improved response time to instructor, student, and/or resource concerns and issues. Such synchronized learning solution networks, in addition to a resources synchronization platform, may typically utilize a content development platform, an electronic delivery platform, and a learning administration platform, all of which communicating electronically with one another and with the resources synchronization platform.

Where an organization's learning solution includes the use of an independent business entity according to a service level agreement, the decision support tool and resource synchronization platforms of the present invention provide reports on the key metrics defined in the agreement. A service level agreement is a contract between the learning solution services provider and the licensing (i.e., outsourcing) organization that establishes the requisite quality and effectiveness levels of the learning solution services as measured by one or more pre-selected performance metrics. As with internally managed training, suitable metrics for a service level agreement can relate to measurements of the output of a learning solution (e.g., instructional course-hours developed or delivered), measurements of performance level of learning efforts provided by the learning solution (e.g., student satisfaction, test and/or certification results), and measurements of the business impact of learning efforts (e.g., improvements in employee productivity following training). The terms of a service level agreement may require (as compared with the levels measured before the implementation of a given learning effort), for example, minimum learning-output metrics values relating to increases in hours of electronic instuction materials made available, minimum learning-performance metrics relating to employee certifications, and minimum learning-impact metric increases regarding gross sales generated by each trained salesperson. Certain types of metrics may include internal metrics gauging service levels associated with the effectiveness with which an outsourced learning services provider is offering services and managing resources. The decision support tool and resource synchronization platform track and compile pre-selected performance metrics and provide data sorting and reporting processes to allow the generations of regular resource usage and learning management reports. Such reporting features may be used by an outsourcing organization on a continuous basis to facilitate cost allocation among appropriate business units or to specific learning efforts (equivalently, "training efforts") for use within the learning solution, and to gauge the level of effectiveness of particular learning efforts in helping the organization reach desired business objectives. In this manner. the development, management and delivery of future learning efforts can be continuously improved.

In one particular embodiment of the invention, a synchronized learning solution network adapted to facilitate information sharing within a learning services providing entity is provided. The synchronized learning solution network comprises a content development platform that contains electronic tools for receiving input relating to the compiling of instructional materials and generating electronic learning content, an electronic delivery platform that contains electronic tools for delivering instruction to students, a learning administration platform that contains electronic tools for storing said electronic learning content, storing registrar information regarding said students and said instruction, and storing catalog information regarding said learning content; and a resources synchronization platform. The resources synchronization platform includes a resources synchronization tool adapted to obtain and store data regarding compilation and generation functions as performed by the content development platform, data regarding delivery functions as performed by the delivery platform, and the registrar and catalog information from the learning administration platform. The resources synchronization tool provides an interface for accessing and processing stored compilation data, generation data, delivery data, registrar information and catalog information upon request by learning administrators, and the tool allows processing of the accessible data and information into resource utilization reports on demand such that said reports may be utilized to make resource allocation decisions across said learning services providing entity.

In another particular embodiment of the invention, a decision support and work management tool adapted to synchronize aspects of a learning solution is provided. The tool includes electronic communication connections to various tools and platforms utilized by the learning solution to support content development, instruction delivery, and learning solution administration functions. The communication connections are adapted to receive performance metrics data collected from various aspects of said learning solution and store them in databases adapted to store said performance metrics data as it is received. The tool also includes a resource allocation interface adapted to provide learning administrators with access to the stored performance metrics data, with the interface providing functionality to compile the performance metrics data into sortable learning solution resource scheduling and usage reports. The resource allocation interface also provides functionality for learning administrators to make or modify schedules and resource allocations for learning content delivery and development, and the scheduling and usage reports assist learning administrators in making centralized and informed decisions regarding said schedules and resource allocations.

The invention having been thus summarized, preferred embodiments thereof will now be described in detail with reference to several figures.

### Brief Description of the Drawings

Fig. 1 is a schematic diagram depicting the interaction of the basic modules of a learning solution for which decision support and resource management according to embodiments of the present invention may be applied.
Fig. 2 is schematic diagram depicting decision support tool as it may be utilized in a learning solution environment to provide a synchronized transformational learning system.
Fig. 3a is a schematic diagram demonstrating some of the various decisions and resource allocation issues that must be addressed in the management of a learning solution of the type depicted in Fig. 1.
Fig. 3b is a schematic diagram depicting a decision support tool according to embodiments of the present invention as it interacts with various business process and management modules to assist in learning resource allocation and other synchronization decision making issues that may be presented by a learning solution.
Fig. 4 is a schematic diagram depicting a network of learning platforms that communicate to provide coordination and synchronization of learning content development, delivery and management so as to enhance the learning solution's response time to instructor, student, and/or resource concerns and issues.

### Detailed Description of the Preferred Embodiments

As used hereafter, the term "organization" is used broadly to identify the business entity that is in need of a solution that provides learning services. The learning solutions according to the present invention can either be outsourced by such organizations (whereby the processes of the learning solution are implemented by a third party learning services provider under contract to a "learner" organization) or can be implemented internally within the organization (as, for example, an independent business unit within the "outsourcing" organization). In embodiments of the invention wherein a learning services business unit within an organization provides learning services to other business units within the organization, the learning services business unit would still feel the need to satisfy customers as it would be responsible for generating a "profit" by meeting predefined performance metrics set by "client" business units (i.e., the other more traditional business units of the organization) and allocating learning effort charges as expenses to the client business units as appropriate. In this manner, the learning solutions according to the present invention can be characterized as "outsourceable" by an organization.

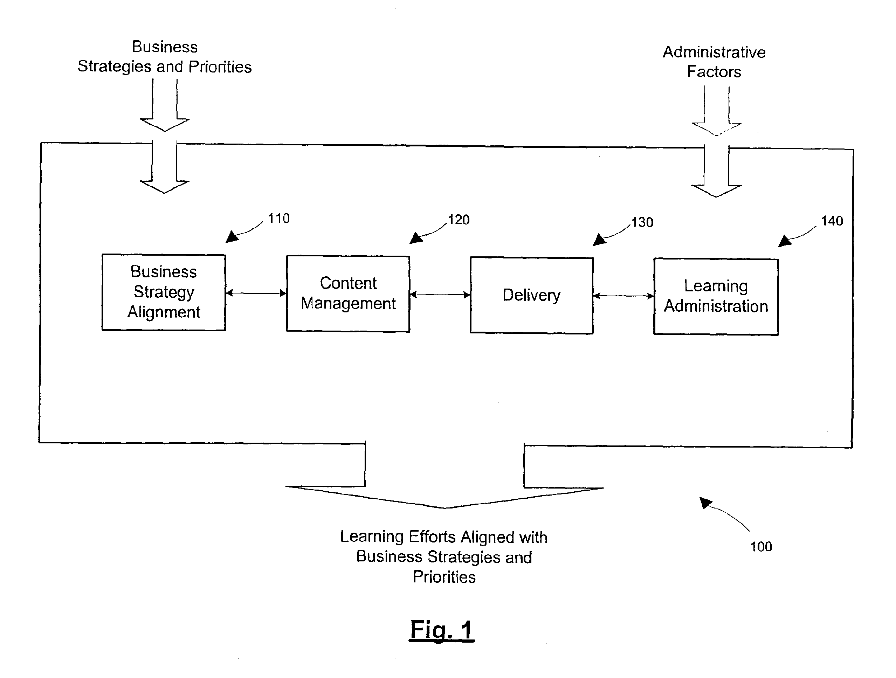

An example of one specific type of learning solution 100 for which embodiments of the invention may be advantageously employed is conceptually depicted in the schematic diagram of Fig. 1. Solution 100 comprises modules of interrelated and interdependent business processes, which may be automated by electronic tools provided by various communication platforms as will be described in more detail below, that manage and coordinate the learning solution tasks of the prioritization of business learning needs and selection of learning effort approaches, the design, development and management of learning content, the coordination and delivery of learning content and instruction, and the administration of learning solution performance. The interaction of the various modules of business processes with one another helps to define the services, performance metrics and application capabilities, among other things, required to support an optimized outsourceable learning solution to meet a given organization's business learning objectives.

As depicted by the example of Fig. 1, business strategy alignment module 110 comprises processes that identify business strategies of the organization and accept requests for learning efforts (e.g., employee training in a particular product line) from the organization (and/or its business units). It then aligns the organization's overall learning solution goals and the objectives of requested learning efforts with the organization's current strategy, business objectives and organizational structure. The processes comprising the business strategy alignment module thereafter identify potential learning efforts to meet the objectives of the organization, and support the downstream development and delivery of a tailored learning curriculum by providing relevant information to processes in the various other modules (120, 130 and 140) of solution 100. This alignment ensures that learning curricula is designed to meet the organization's most current needs. Co-owned and co-pending U.S. Non-provisional Patent Application Serial No. 10/265,156, filed October 7, 2002, provides a detailed description regarding the operation of one preferred type of learning solution as depicted in Fig. 1 including the operation of one preferred type of business strategy alignment module.

Once solution 100 identifies what types of learning or curriculum are desired and/or required by the organization and prioritizes them, the solution is also able to deliver suitable learning materials to fill those needs. Content management module 120 includes processes and associated tools required to build and/or buy appropriate learning content based upon learning objectives and delivery requirements. On one hand, it may be easier and cheaper to buy precompiled learning content from a third party as opposed to developing or compiling new content. Alternatively, the specialized needs of the organization may make it difficult to utilize outsourced or precompiled learning or training content. Content management module 120 facilitates solution 100 taking factors such as these appropriately into consideration when assembling suitable learning content. Certain versions of learning solutions 100 may have content management modules 120 which include course content development modules specifically adapted to design and develop course materials on behalf of the content management module by identifying and the most suitable mechanisms for efficiently (in terms of both budget compliance and learning impact) obtaining and delivering course content to students, and assembling course materials accordingly.

After learning content has either been obtained from a third party or developed internally by the learning solution, the business processes of content management module 120 also create, manage and operate a central repository of learning content and knowledge objects. The learning content and knowledge objects are appropriately formatted, tagged and cataloged such that they can be reused as appropriate and may be easily accessed for delivery to the learner in the desired manner when scheduled or requested. Co-owned and co-pending U.S. Non-provisional Patent Application Serial No. 10/401,045, filed March 28, 2003, the specification of which is hereby incorporated by reference, provides a detailed description regarding the operation of one preferred type of learning solution as depicted in Fig. 1 including the operation of preferred content management and content development modules.

Delivery module 130 in turn contains business processes and related tools for providing the delivery of high quality training across a plurality of synchronous and asynchronous media in a cost efficient manner. The delivery business processes in module 130 facilitate, for example, instructor led training, virtual instructor led training (such as with a live instructor connected to students through videoconferencing or over a computer network like the Internet) including virtual classrooms, and interactive computer software-delivered training systems for self-paced learning. Further, the delivery business processes in module 130 manage coordinating the scheduling of the facilities where training takes place with appropriate instructor and learner schedule commitments.

Still referring to Fig. 1, learning administration module 140 contains business processes and associated tools necessary to provide learning management and administrative services across the entire learning solution 100. Exemplary learning administration business processes include individual curriculum management, course registration, course fulfillment management, and record keeping of training results. Learning administration module 140 also can provide the learning solution 100 with the capability to manage the overall lifecycle of a learning initiative and to monitor appropriate metrics related to the outputs and performance of a learning solution, or elements thereof, so as to provide continuous improvement to currently ongoing and future learning initiatives.

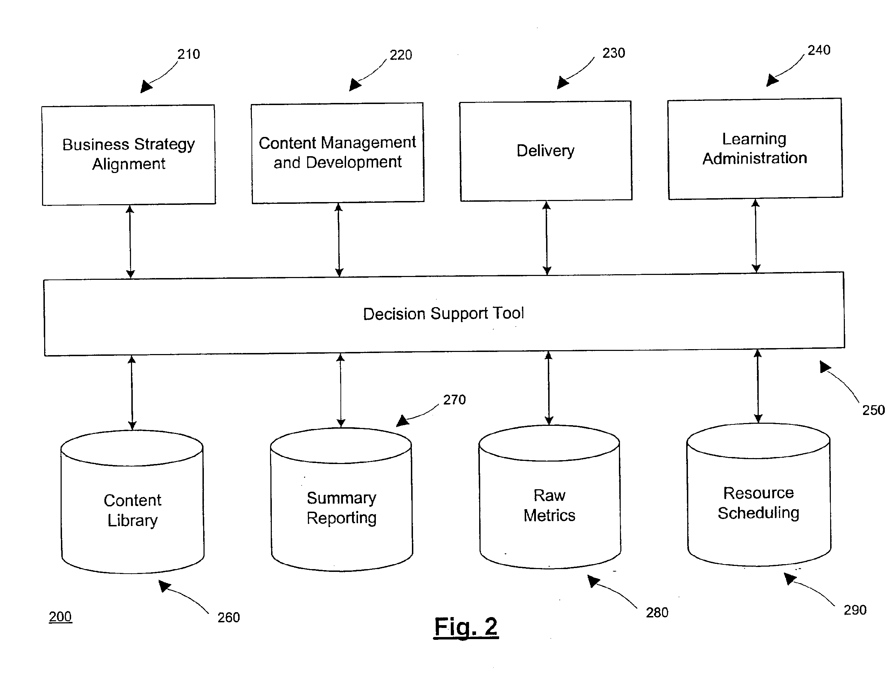

Embodiments of the present invention facilitate the operation of various learning solutions, including learning solutions of the type of solution 100 of Fig. 1. The features and advantages of the various embodiments of the invention will be further understood from the discussion of Figs. 2-4 that follows.

A particular implementation of the transformational learning outsourcing solution 100 as improved by incorporating aspects of the present invention is conceptually depicted in the block diagram of Fig. 2. Specifically, Fig. 2 shows a synchronized learning solution 200 having various modules strategically linked together via a decision support tool 250 according to one embodiment of the present invention. Solution 200 comprises a business strategy alignment module 210, a content management and development module 220, a delivery module 230, a learning administration module 240, a decision support tool 250, a content library database 260, and a summary reporting database 270. The interaction of the decision support tool 250 with the business strategy alignment module 210, the content management and development module 220, the delivery module 230, and the learning administration module 240 defines the content and development of the various courses as well as the performance metrics by which the effectiveness of the overall system may be monitored and measured.

In operation, the business strategy alignment module 210 receives business learning strategies and objectives from the licensing enterprise, which hopes to align its learning objectives with its business strategies. The business strategy alignment module 210, with the decision support tool 250, sends the licensing enterprises' objectives to the content management and development module 220 and the delivery module 230, which collectively use the information to develop and deliver a course curriculum that is designed to be aligned with the licensing enterprise's objectives.

Once a series of courses has been designed, developed, and delivered, the learning administration module 240 executes the functions responsible for administering the various courses. These functions include, but are not limited to, providing documentation to instructors, enrolling students, creating student profiles, notifying students of scheduling confirmations, grouping learning courses into logical categories, assigning course numbers, sending students required pre-course information, assigning resources to specific courses, modifying resources for specific courses, processing grade and attendance information, processing on-line evaluation forms, and updating student transcripts. For example, the learning administration module 240 can provide updates of student attendance information based on the attendance statistics it may receive from an instructor. This information is then stored in the summary reporting database 270, where the decision support tool 250 is able to access it upon request.

While the content management and development module 220 is maintaining course curricula, the delivery module 230 is coordinating the delivery of course information to students, and the learning administration module 240 is overseeing the overall operation of the learning solution, proprietary learning content, electronically deliverable materials, and various statistical metrics are created by the various applications. The content information and electronically deliverable materials are stored in the content library database 260 for later publishing and/or usage by a learning course. Likewise, metrics information is stored in a raw metrics database 280.

The decision support tool 250 operates as a bridge between various modules of the solution 100 because it receives requests for learning information from operators, managers, and content developers, associated with the learning solution and who are engaged in business strategy alignment, content management, delivery, and/or learning administration activities, and initiates processing of these requests by retrieving the requested data from the various databases 260-290. After retrieving the requested information, the decision support tool 250 allows learning administrators to perform any required analyses and/or calculations on the information in order to facilitate efficient operation of the learning solution. For example, metrics data can be used to facilitate scheduling of learning resources (instructor time, classroom usage, etc.). These scheduling decisions can be reflected in the resource scheduling database 290. Raw metrics data can likewise be processes into reports of summary statistics covering various time periods and courses and then stored in a summary reporting database 270. In this manner, metrics data can be analyzed and compiled into reports regarding the usage of learning resources over a time period of interest. The decision support tool thereby allows any administrator, requesting application or other electronic tool to retrieve data that facilitates operation of a learning solution presented to the user in a logical, intuitive and valuable manner.

The decision support tool 250 is used by learning administrators, directors and management to compile, track, report and utilize performance metrics to assist in ensuring that learning efforts provided by the solution coincide with business strategies and priorities in all aspects of learning including the identification and prioritization of business learning needs and selection of learning effort approaches, the design, development and management of learning content, the coordination and delivery of learning content and instruction, and the administration of learning solution performance. Such performance metrics approximate the objective indicia that are typically used to gauge success in traditional business units such that the performance of specific learning efforts or the learning solution as a whole can be measured in a manner similar to how the organization measures performance in more traditional performance-driven areas of their core business. Various performance metrics can be collected, tracked compiled, and reported automatically by information gathering and sorting tools, such as is described below with respect to Fig. 5.

Performance metrics can include learning-output metrics, learning-performance metrics, and learning-impact metrics. Learning-output metrics focus upon easily quantifiable objective measures of the amount and delivery success of learning services or products provided by a specific learning effort or by the learning solution (or parts thereof). For further illustration by way of examples, learning output metrics can include the amount of self-paced computer-delivered course hours developed internally for a given learning effort by the content management module (including high-fidelity content, low fidelity content, and total content), the number of employees who attend a given ILT course, the number of instructor course-hours provided by the entire solution, the number of student hours of instruction delivered by the solution to employees of the organization, and the number of new courses offered in a given time frame. Learning-output metrics therefore focus upon output levels, and not directly on the quality, of the learning solution and the learning efforts the solution oversees and provides.

In preferred embodiments of the present invention, a particular performance metric termed a development ratio can be monitored wherein estimates of the costs and resources needed to develop a particular course (or portions or elements thereof) are made and compared with the actual costs incurred and resources used. Various sub-ratios reflecting effort and time expenditures measured at various phase gates (such as nightly or weekly) thereby allow content developers to better forecast future development costs based by consistently revising predictions of expected production and consumption rates. This particular learning-output performance metric can be utilized as an internal performance metric that is used to measure the accuracy of previous cost estimates. Specifically, the learning solution evaluates the development ratio to determine whether future cost estimates should be increased or decreased from previous estimates, increasing the accuracy of future costs forecasting and allowing for the fixed billing of development costs. In this manner, long term learning services outsourcing contracts can be simplified through the use of fixed cost schedules.

Learning-performance metrics and learning-impact metrics, however, both attempt to capture and reflect the quality of the learning solution and individual learning efforts. Specifically, learning-performance metrics provide subjective and objective feedback regarding how effective a learning effort was in teaching the students the desired concepts or skills. This category of performance metrics can include tabulations from subjective surveys of students regarding a recently-completed course (e.g., containing questions such as "Did this class provide the right detail and level of information for you?" or "Were the examples presented in this course relevant to your business/marketplace?") as well as objective measures of learning performance (such as test results immediately following the course, or third party employee certification results).

Learning-impact metrics are objective and subjective measures of performance of the learning solution and its individual learning efforts which capture and reflect the transfer of knowledge from the training received to appropriate uses in the trained employees' work environments and, preferably, ultimately to the organization's overall benefit and return on its learning investments. Learning-impact metrics that are designed to measure the transfer of knowledge to the work environment, for example, can include measures in the decrease in specific workplace accidents following a learning effort focusing on safety training, and measures regarding the change in production speed and quality in the output of a manufacturing facility following training regarding more efficient techniques. Concurrently, learning-impact metrics that capture the return on learning investment can, for example, measure the change in gross sales generated per each salesperson employee following the completion of a learning effort which taught ways to competitively distinguish the organization's products over competitors' products.

In preferred embodiments of the present invention the learning solution is provided by an independent business entity according to a service level agreement with an organization in need of learning services outsourcing. A service level agreement is a contract between the learning solution services provider and the licensing (i.e., outsourcing) organization. This contract establishes the requisite quality and effectiveness levels of the learning solution services as measured by one or more pre-selected measurable performance metrics.

The terms of a service level agreement may require, for example, minimum-learning output metrics values relating to increases in student enrollment and course hours, minimum learning-performance metrics relating to employee certifications, and minimum learning-impact metric increases regarding gross sales generated by each trained salesperson.
Such an outsourced learning solution utilizes the decision support tools and related methods according to the present invention to track and generate reports regarding pre-selected performance metrics to the outsourcing organization on a continuous basis to facilitate cost allocation among appropriate business units or to specific learning efforts (equivalently, "training efforts"). The metrics and reports may then be used within the learning solution to gauge the level of effectiveness of particular learning efforts in helping the organization reach desired business objectives and thus refine future learning efforts or refine resource usage policies to ensure continued and/or future compliance with the terms of an applicable service level agreement.

For example, such metrics can be adapted to the management of a large, complex learning solution to facilitate cost management and resource optimization in an effort to further the learner organization's business objectives and strategies. Specifically, such learning solution management can include overall learning budget management and the selection and management of learning efforts across a portfolio of projects. If, for example, a business unit of the learner organization budgets $10M to spend on training, an outsourced learning service provider's job would be to optimize these dollars across training delivery methodologies and competing learning needs. Since not all delivery methodologies cost the same, and since learning needs vary in complexity, it would be an outsourced learning services provider's role to identify an affective set of learning efforts using the best mix of delivery methodologies to optimize learning solution performance within the allocated budget. Embodiments of the present invention facilitate learning solutions portfolio management in a manner that makes comprehensive outsourced learning solutions viable for complex and/or large-scale learner organizations.

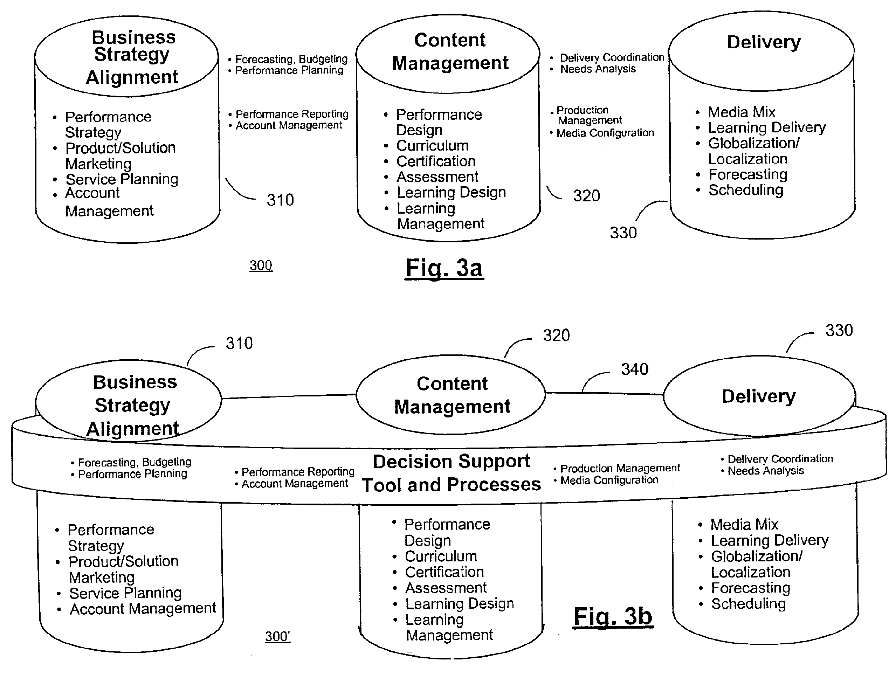

Fig. 3a graphically depicts the responsibilities and interactions of various modules of a learning solution 300 that contains organized modules designed to accomplish specific competencies. As depicted in the example of Fig. 3a, the business strategy alignment module 310 is responsible for devising a performance strategy for the learning organization based on the larger corporate objectives, while the content management module 320 is responsible for assembling and maintaining the learning curriculum in accordance with the strategy. A delivery module 330 is also present and responsible for actually providing the learning curriculum to the target students. Understandably, information and decisions from one module must be passed along to other modules to ensure that learning objective are executed in accordance with aligned objectives. Changes in strategy must also be communicated separately as they arise. Thus, it is necessary for modules 310, 320 and 330, and persons performing activities associated with those modules, to be able to interact and share information.

Fig. 3b represents a learning solution 300' for a learning organization synchronized according to the present invention. As shown by the recurring presence of modules 310, 320 and 330, the solution 300' addresses the same competencies shown in the comparatively less efficient learning solution 300 of Fig. 3a. However, the learning solution 300' incorporates a decision support tool 340 and related processes according to preferred embodiments of the invention to optimize training efforts and resources to allow interactive information sharing. The representative training modules include the primary modules mentioned in the above discussion of learning solution 300, a business strategy alignment module 310, a content management module 320, a delivery module 330, all in interaction with a decision support tool 340 (other modules, such as a learning administration module, can be adapted as detailed above). The decision support tool 340 serves as a common gateway to various repositories of information generated and/or needed by each module that learning administrators can for example, use to forecast costs, budget, plan performance, report performance, manage accounts, manage production, configure media, manage limited resource usage, coordinate learning delivery, and analyze training needs. By providing common access to information across each module the data required for decision within each module is available in real time without communication gaps between learning organization modules. This structure increases the accessibility of key information and eliminates the redundancy and inconsistencies inherent in typical contemporary learning solutions.

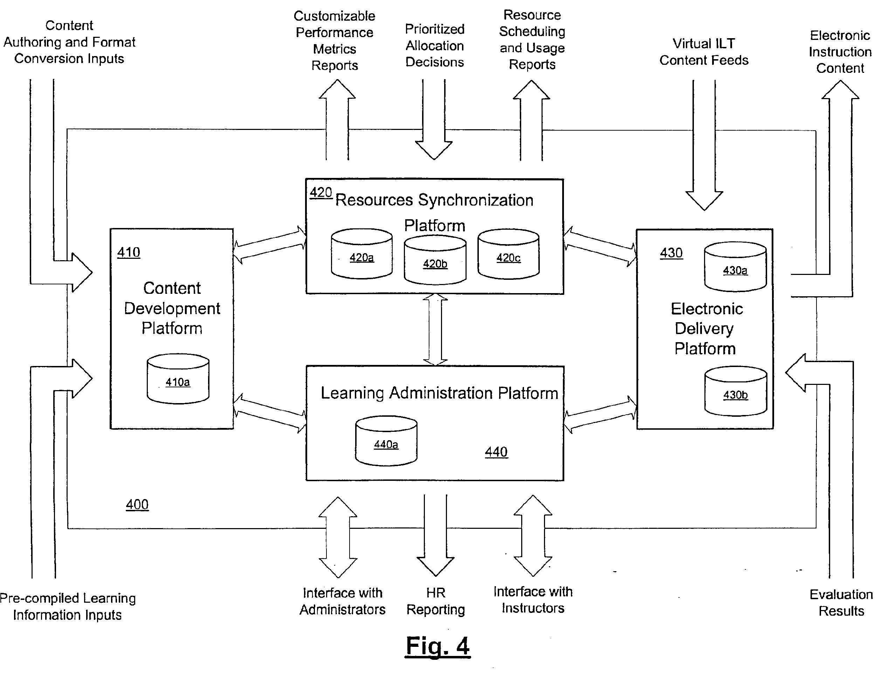

The operation of the modules of synchronized learning solution 300' may be facilitated by various information-sharing tools provided by a computing network. Fig. 4 schematically depicts a network 400 of learning platforms that communicate to provide coordination and synchronization of learning content development, delivery and management so as to enhance the learning solution's response time to organization, instructor, student, and/or resource concerns and issues. The learning platform network 400 according to such embodiments integrates various electronic tools to provide the information sharing capabilities needed by a learning solution services provider to implement and manage learning efforts efficiently according to the business desires of a complex learner organization. As shown in Fig. 4, the preferred learning platform network 400 comprises a content development platform 410, a resources synchronization platform 420, an electronic delivery platform 430, and a learning administration platform 440 all communicating electronically with one another. Each of the platforms that comprise the network 400 are composed of suitable servers, storage devices (including databases), memory devices and support hardware as is known in the art of computer networks to achieve the functions of each platform as described herein.

As shown in Fig. 4, the network 400 also interfaces with various users (including learning solution administrators) to facilitate the dissemination of learning resource allocation information, on an as-requested basis, and thereby enable informed decision making regarding the utilization of various learning resources (personnel, electronic, physical, etc.). The resources synchronization platform 420 of the learning solution network 400, which may support a decision support tool according to the present invention as described above, collects and tracks resource availability information regarding deliverable learning content, and delivery resources (classrooms, virtual classroom technology, target learner participation windows, instructor schedules) and organizes this information into sortable scheduling and usage reports that allow learning administrators to make and/or modify schedules and resource allocations for learning content delivery.

The resources synchronization platform 420 of the learning solution network 400 also provides a means whereby important learning-output metrics are monitored through real-time access to critical information (such as by receiving information from electronic delivery platform 430 regarding student attendance at virtual classrooms and storing that information within the resources synchronization platform 420). The reports provided through the interface with the resources synchronization platform 420 thereby provides administrators with up to date resource allocation data presented in a logical, intuitive and valuable manner that promotes efficient learning content delivery and utilization of constrained learning solution resources. As resource allocations are modified by administrators after viewing appropriate reports, these allocations are stored and reflected in future allocation reports until delivery is completed or until further allocation modifications are made.

Optionally, the resources synchronization platform 420 further provides a means whereby learning-performance and learning impact metrics are compiled and tracked. Preferably, these metrics are collected in real-time from various portions of network 400 (such as test score information collected by the electronic delivery platform 430 or manually entered by instructors and stored in the learning administration platform 440, or learning impact metrics data entered by learning administrators via the learning administration platform 440). The resources synchronization platform 420 similarly provides various reports of these performance metrics to assist administrators in performing various processes of the business management module as described herein, including the reconsideration and revision of business strategies and priorities, associated learning budget allocations, and service level agreements.

In use, learning solution network 400 facilitates the various processes as described above that embody learning solutions according to the present invention. By way of illustration, once a new development work plan calling for new or modified computer-deliverable self-paced instruction content has been sufficiently finalized in response to a learning effort proposal, content developers can author electronic learning content objects using the tools and resources of content development platform 410. Electronic learning information and in-development learning content objects are stored in a developing content database 410a until they are ready (i.e., compiled, formatted, versioned, tagged and cataloged) for electronic delivery to students. The status of any completed content objects is then electronically communicated to the resources synchronization platform 420 while those objects are readied for appropriate storage and subsequent delivery.

Resources synchronization platform 420 tracks the introduction of new or modified learning content from the content development platform 410 as that content is stored in a content warehouse database 420a (along with pre-existing content objects) according to appropriate tags and catalog identifiers assigned by the content development platform 410. These tags and identifiers allow the network to locate and identify content objects relating to particular courses and deliver the appropriate objects upon subsequent demands initiated via the electronic delivery platform 430.

On an ongoing basis, the resources synchronization platform 420, as may be accessed via a user interface of the decision support tool, simultaneously provides an interface for learning administrators to review the current allocation of learning resources (as detailed in a resource schedule database 420b) through customized scheduling and usage reports, and then use these reports for making resource allocation decisions (using a graphical interface of a scheduling tool provided by the resources synchronization platform 420) as appropriate based upon system constraints, current allocations, demands by learning efforts for learning solution resources, and the relative priorities of these competing demands for resources. Any resource allocation decisions made in this manner are appropriately reflected in the resource schedule database 420b. The allocation data stored in the resource schedule database 420b, and thus the reports provided by the resources synchronization platform 420, can include the current allocations and availabilities of resources used by all learning efforts of the learning solution 200. In this manner, decision making regarding the scheduled delivery of learning content (both electronic and otherwise) can be synchronized across an entire organization in a proactive manner to avoid schedule conflicts and inefficient usage of finite learning resources.

Simultaneously, the resources synchronization platform 420 preferably provides means for accessing correlated performance metrics data that is automatically collected or manually inputted across the entire platform and stored for purposes of enabling the business management of the learning solution. These performance metrics can include learning-output performance metrics (such as may be, for example, automatically tracked by the resources synchronization platform 420 or electronic delivery platform 430 or inputted manually by instructors into the learning administration platform 440), learning-performance metrics (such as may be, for example, automatically tracked by the electronic delivery platform 430 or inputted manually by instructors into the learning administration platform 440), or learning-impact metrics (such as may be, for example, tracked and inputted manually by a learning solution administrator directly into the performance metrics database 420c). A performance metrics tracking and reporting capability provided by the decision support tool of the resources synchronization administration platform 420 provides electronic access for learning administrators to the performance metrics database 420c and thereby enables them to generate up-to-date reports regarding performance metrics they select at any time and for any time period. In this manner, the performance metrics data that enables the learning solution to be run like a business (or business unit) can be centrally collected and more easily utilized, which may be useful, for example, where minimum performance levels are dictated in a service level agreement or where learning costs must be allocated among various learning efforts and associate business units. Understandably, reports detailing such performance metrics data can be used by the business strategy alignment module 110 as described above to assemble, reassess and revise learning blueprints, learning solution budgets and overall strategies and priorities as necessary.

Electronic delivery platform 430, as shown in Fig. 4, contains a delivery management database 430a and a delivery results database 430b. The delivery management database 430a contains catalog and learner access information relating to courses and related learning content so as to control access by various target learners (i.e., employees) to appropriately authorized learning content. Data regarding target learner user participation (or, alternatively, "attendance") and training scores in any synchronous or asynchronous electronically-delivered learning content is logged in the delivery results database 430b. The information of the delivery results database 430b is electronically accessible via the resources synchronization platform 420 by learning solution administrators to facilitate compiling and tracking learning effort progress and results and to generate and report performance metrics as required by any service level agreements as described herein.

While exemplary embodiments of the invention have been shown and described herein and in the attached appendices, it will be obvious to those skilled in the art such embodiments are provided by way of example only. Numerous insubstantial variations, changes, and substitutions will now be apparent to those skilled in the art without departing from the scope of the invention disclosed herein by the Applicants. Accordingly, it is intended that the invention be limited only by the spirit and scope by the claims as appended hereto.

## Claims

1. A synchronized learning solution network adapted to facilitate information sharing among a learning services providing entity, said network comprising:
a content development platform, said content development platform containing electronic tools for receiving input relating to the compiling of instructional materials and generating electronic learning content;
an electronic delivery platform, said electronic delivery platform containing electronic tools for delivering instruction to students, said delivered instruction incorporating said electronic learning content;
a learning administration platform, said learning administration platform containing electronic tools for storing said electronic learning content, storing registrar information regarding said students and said instruction, and storing catalog information regarding said learning content; and
a resources synchronization platform, said resources synchronization platform including a resources synchronization tool adapted to obtain and store data regarding compilation and generation functions as performed by said content development platform, data regarding delivery functions as performed by said delivery platform, and said registrar information and said catalog information from said learning administration platform; wherein
said resources synchronization tool provides an interface for accessing and processing said stored compilation data, generation data, delivery data, registrar information and catalog information upon request, said synchronization tool processing said accessible data and information into resource utilization reports on demand such that said reports may be utilized to make resource allocation decisions across said learning services providing entity.

2. The synchronized learning solution network according to claim 1, wherein said electronic delivery platform is adapted to record performance metrics during delivery of said instruction and wherein said content development platform is adapted to record performance metrics during compilation of instructional materials and generation of electronic learning content, and wherein said performance metrics are said compilation data, generation data and delivery data.

3. The synchronized learning solution network according to claim 2, wherein said resources synchronization tool comprises a decision support tool adapted to compile and output reports detailing performance metrics data, said data measuring the development of learning content and the delivery of instruction to said students, said performance metrics data being useful to assessing whether learning requirements of a learner organization are being met.

4. The synchronized learning solution network according to claim 3, wherein said performance metrics data is collected electronically from said content development platform, said electronic delivery platform, and said learning administration platform and stored in a metrics database in substantially real time.

5. The synchronized learning solution network according to claim 2, wherein said development data comprises various performance metrics electronically collected by said content development platform, said performance metrics including development ratios that measure production of course content and materials in light of expended costs and man-hours over elapsed time periods.

6. The synchronized learning solution network according to claim 2, wherein said electronic delivery platform is adapted to record performance metrics data during delivery of instruction, said performance metrics data being accessible by said resources synchronization tool in substantially real time.

7. The synchronized learning solution network according to claim 1, wherein said resources synchronization tool further provides an electronic interface for allocating the utilization of constrained learning resources subject to relevant instructor and student availabilities.

8. The synchronized learning solution network according to claim 1, wherein said resources synchronization tool is adapted to organize allocation and scheduling information into sortable scheduling and usage reports that allow learning administrators to make and/or modify schedules and resource allocations for learning content delivery.

9. The synchronized learning solution network according to claim 1, wherein said reports may support learning solution processes selected from the group consisting of forecasting, budgeting, performance planning, performance reporting, account management, production management, media configuration, delivery coordination, and needs analysis.

10. The synchronized learning solution network according to claim 9, wherein said learning solution is outsourced from a learner organization to said learning services providing entity according to a learning services agreement, said agreement detailing minimum service levels that must be met by said providing entity, and wherein performance metrics are collected from said content development platform, said electronic delivery platform, said learning administration platform and made accessible by said resources synchronization tool to gauge whether said learning solution is producing learning efforts meeting said minimum service levels.

11. The synchronized learning solution network according to claim 10, wherein identified business goals and strategies of said learner organization are used to define performance metrics reflected in said learning services agreement.

12. The synchronized learning solution network according to claim 11, wherein said performance metrics comprise a development ratio that tracks production of course content and materials in light of expended costs and man-hours and elapsed time.

13. The synchronized learning solution network according to claim 12, wherein learning costs are recorded, allocated and billed to appropriate business units or projects for learning effort expenditures such that said learning solution can be implemented independently by said learning services provider like a separate business entity from the learner organization.

14. The synchronized learning solution according to claim 10, wherein said learning services agreement establishes a cost schedule that provides a pre-set standard set of charges for tasks performed during said developing of said course content and materials, and wherein said reports of said performance metrics are utilized to make cost allocations, revise said cost schedule and manage quality of processing used in developing said course content and materials.

15. A decision support and work management tool adapted to synchronize aspects of a learning solution, said resource support too comprising:
electronic communication connections to various tools and platforms utilized by said learning solution to support content development, instruction delivery, and learning solution administration; said communication connections adapted to receive performance metrics data collected from said aspects of said learning solution;
databases adapted to store said performance metrics data as it is received;
a resource allocation interface adapted to provide learning administrators with access to said stored performance metrics data, said interface providing functionality to compile said performance metrics data into sortable learning solution resource scheduling and usage reports, said resource allocation interface also providing functionality for learning administrators to make or modify schedules and resource allocations for learning content delivery and development, wherein said scheduling and usage reports assist said learning administrators in making centralized and informed decisions regarding said schedules and resource allocations.

16. The decision support and work management tool according to claim 15, wherein said databases include a content library database for storing instructional materials and learning content data, a raw metrics database for storing performance metrics data, a resource scheduling database for storing schedules and resource allocations data, and a summary reporting database for storing data regarding compiled scheduling and usage reports.

17. The decision support and work management tool according to claim 15, wherein said learning solution is outsourced by a learner organization to a learning services provide according to a learning services agreement, said agreement detailing minimum service levels, and wherein said performance metrics and reports of said tool may be utilized to determine whether said method is producing learning efforts meeting said service levels.

18. The decision support and work management tool according to claim 15, wherein said electronic communication connections are adapted to obtain instruction delivery data electronically from an electronic delivery platform.

19. The decision support and work management tool according to claim 18, wherein said electronic delivery platform is adapted to record performance metrics during delivery of instruction to target learners, said performance metrics being stored in said databases for accessing by said resources allocation interface.

20. The decision support and work management tool according to claim 15, wherein said electronic communication connections are adapted to obtain content development data electronically from a content development platform.

21. The decision support and work management tool according to claim 20, wherein said content development platform is adapted to record performance metrics during compilation of instructional materials and generation of electronic learning content, said performance metrics being stored in said databases for accessing by said resources allocation interface.

22. The decision support and work management tool according to claim 21, wherein said performance metrics electronically collected by said content development platform include development ratios that measure production of course content and materials in light of expended costs and man-hours over elapsed time periods.

23. The decision support and work management tool according to claim 15, wherein said electronic communication connections are adapted to obtain learning solution administration data electronically from a learning administration platform.

24. The decision support and work management tool according to claim 15, wherein said resources allocation interface provides enables a learning administrator to make decisions regarding utilization of constrained learning resources across multiple learning efforts subject to relevant instructor and student availabilities.

25. The decision support and work management tool according to claim 15, wherein performance metrics data is collected electronically from a content development platform, an electronic delivery platform, and a learning administration platform through said electronic communication connections and stored in said database in substantially real time.

26. The decision support and work management tool according to claim 15, wherein said learning solution is outsourced from a learner organization to said learning services providing entity according to a learning services agreement, said agreement detailing minimum service levels that must be met by said providing entity, and wherein said performance metrics are made accessible by said resources allocation tool to gauge whether said learning solution is producing learning efforts meeting said minimum service levels.

27. The decision support and work management tool according to claim 26, wherein identified business goals and strategies of said learner organization are used to define performance metrics reflected in said learning services agreement.

28. The decision support and work management tool according to claim 26, wherein said performance metrics comprise a development ratio that tracks production of course content and materials in light of expended costs and man-hours and elapsed time.

29. The decision support and work management tool according to claim 26, wherein learning costs are recorded, allocated and billed to appropriate business units or projects for learning effort expenditures such that said learning solution can be implemented independently by said learning services providing entity like a separate business entity from the learner organization.

30. The decision support and work management tool according to claim 26, wherein said learning services agreement establishes a cost schedule that provides a pre-set standard set of charges for tasks performed during said developing of said course content and materials, and wherein said reports of said performance metrics are utilized to make cost allocations, revise said cost schedule and manage quality of processing used in developing said course content and materials.
